Europäisches Patentamt

European Patent Office

Office européen des brevets

(19)

(11) Publication number: **0 147 010**

**A1**

(12) **EUROPEAN PATENT APPLICATION**

(21) Application number: **84306296.9**

(22) Date of filing: **14.09.84**

(51) Int. Cl.⁴: **H 04 N 5/46**

(30) Priority: **15.09.83 GB 8324696**

(43) Date of publication of application:
**03.07.85 Bulletin 85/27**

(84) Designated Contracting States:
**AT BE CH DE FR IT LI LU NL SE**

(71) Applicant: **SINCLAIR RESEARCH LIMITED**
**25 Willis Road**
**Cambridge CB1 2AQ(GB)**

(72) Inventor: **Sinclair, Clive Marles**
**The Stone House 3 Madingley Road**
**Cambridge(GB)**

(72) Inventor: **Hoodless, Adrian Harry William**
**Dibden Moor End Road**
**Radwell Bedford. MK43 7HY(GB)**

(74) Representative: **Pike, Harold John et al,**
**Abel & Imray Northumberland House 303-306 High**
**Holborn**
**London, WC1V 7LH(GB)**

(54) Improvements in or relating to television receivers.

(57) A portable television receiver, capable of receiving two different standard transmissions which have similar video components but different vision and sound carrier frequency separations, has internal signal processing capable of extracting the sound signal from a transmission on either standard.

Fig.2a.

Fig.2b.

- 1 -

Improvements in or relating to television
receivers

This invention relates to television
receivers.

Small, portable, battery-operated television
receivers have been manufactured in the past but
only recently has it become practicable to
construct such receivers which are sufficiently
small to be carried in a pocket, with the
production of flat, cathode ray display tubes
and other compact display devices.  A disadvantage
with a portable, battery-operated television
receiver is that large batteries are heavy and
are consequently undesirable, and lighter, smaller
batteries do not have a large capacity, so that
they have a short useful life and have to be
replaced frequently, with an attendant cost
penalty.  It is therefore essential in such a
receiver to keep the current consumption as low
as possible.  Partly for this reason and partly
because of limitations of space it is desirable
to include as many of the circuits of the
receiver as conveniently possible in a single integrated circuit or possibly a few integrated circuits. A difficulty in the use of integrated circuits for processing signal waveforms such as are employed in television receivers arises because of the variations in the characteristics and the non ideal behaviour of the elements of the circuits which need correction and/or compensation for acceptable performance.

Another problem with battery-operated receivers is that the voltage produced by the battery falls during its useful life, so that regulation of the voltage is desirable for maintaining the required relationships between the various signals employed in producing the display, which otherwise could become distorted. Such regulation is, however, undesirable because of the power which it consumes.

It is therefore an object of the present invention to overcome one or more of the difficulties outlined above. It should, nevertheless, be borne in mind that the invention is applicable to any type of television receiver and not merely to portable, battery-operated ones.

The resolution of the difficulties outlined above results in a highly portable television

- 3 -

receiver which may, of course, be taken from country to country and which could usefully be capable of automatically receiving whichever television transmission is available in a particular country.

According to the present invention, a television receiver, capable of receiving two different standards transmissions which have similar video components but different vision and sound carrier frequency separations, has internal signal processing capable of extracting the sound signal from a transmission on either standard.

The receiver may have a sub-system capable of processing signals having respective first and second sound sub-carrier frequencies and including:-

(i)  signal mixing means arranged to produce sum and difference frequencies of signals applied to respective first and second input ports and arranged to receive, on the first input port a signal to be processed,

(ii)  an oscillator having an operating frequency that is the mean of the said first and second sub-carrier frequencies connected to the second input port of the signal mixing means, and,

(iii) a detector arranged to operate at a frequency which is the difference between either sub-carrier frequency and the oscillator frequency and arranged to receive the signals produced by the signal mixing means.

In particular, a television receiver sub-system capable of detecting the sound signals of two television standards employing the same number of lines but which give rise to two different intercarrier frequencies, includes:-

(i) signal mixing means arranged to receive an intercarrier sound signal on one input port and an oscillator signal on another input port.

(ii) an oscillator connected to the signal mixing means and arranged to operate at a frequency which is the mean of the two different inter-carrier frequencies, and,

(iii) a product detector arranged to operate at a frequency which is the difference between either intercarrier frequency and the oscillator frequency.

A method of detecting the sound signals of two television standards which have similar video components but which give rise to two different intercarrier frequencies includes the steps of mixing either intercarrier sound signal with an oscillator signal which is the mean value of the two intercarrier frequencies and applying the mixed signal to a detector arranged to operate at a frequency which is the difference between either intercarrier frequency and the oscillator frequency.

Detection may include generating in-phase and antiphase mixed signals, obtaining a further signal shifted by $90^{\circ}$ in phase from the in-phase and anti-phase mixed signals from within a network energised by the in-phase and anti-phase mixed signals, and applying the $90^{\circ}$ phase shifted signal to either the in-phase or the anti-phase mixed signal, or to both the in-phase and anti-phase mixed signals, in a product detector.

A product detector, suitable for use in a television receiver according to the present invention, includes a differential input mixing stage, a capacitor-resistor network connected across the differential input providing, from within the capacitor-resistor network, a $90^{\circ}$ phase shift relative to either input, and means arranged to apply a signal present at the said $90^{\circ}$

phase shift position of the network to the input mixing stage to effect product detection of a signal applied to the product detector.

Preferably, the capacitor-resistor network consists of a series circuit of a capacitor and a resistor suitable for incorporation in an integrated circuit product detector.

Various sub-systems of a television receiver in accordance with the present invention will now be described, by way of example only, and with reference to the accompanying drawings, in which:-

Fig. 1 is a circuit diagram representation of a multi-standard portable television receiver including an integrated circuit with sub-systems, in accordance with the present invention,

Fig. 2 is a block diagram representation of the sub-systems of the integrated circuit included in Fig. 1,

Fig. 3 is a block diagram representation of the signal-input circuit blocks forming part of Fig. 2 and including sub-systems in accordance with the present invention, and

Fig. 4 is a circuit diagram representation of a sound mixer, a sound intermediate frequency amplifier, sound demodulator, and sount output amplifier, which form the sound processing blocks of Fig. 3.

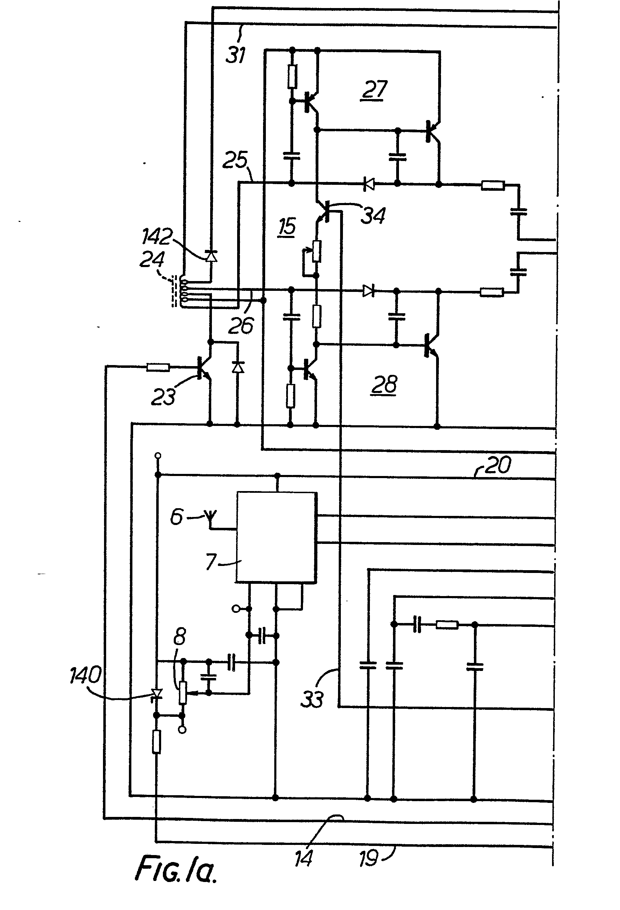

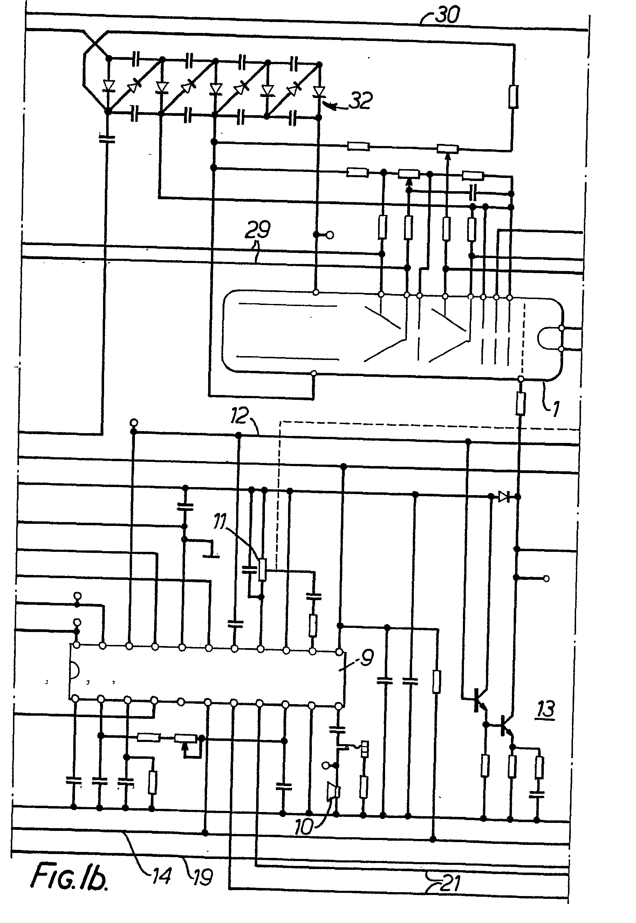

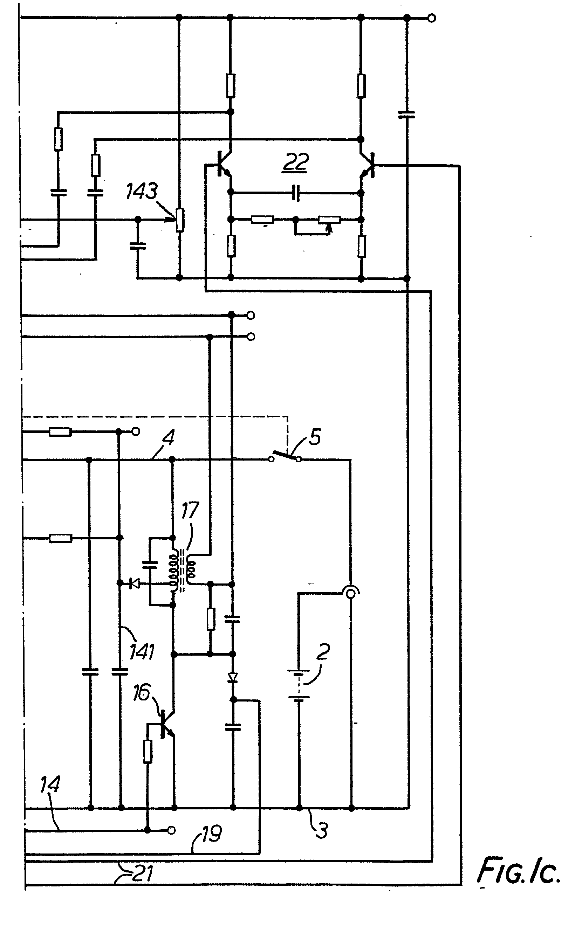

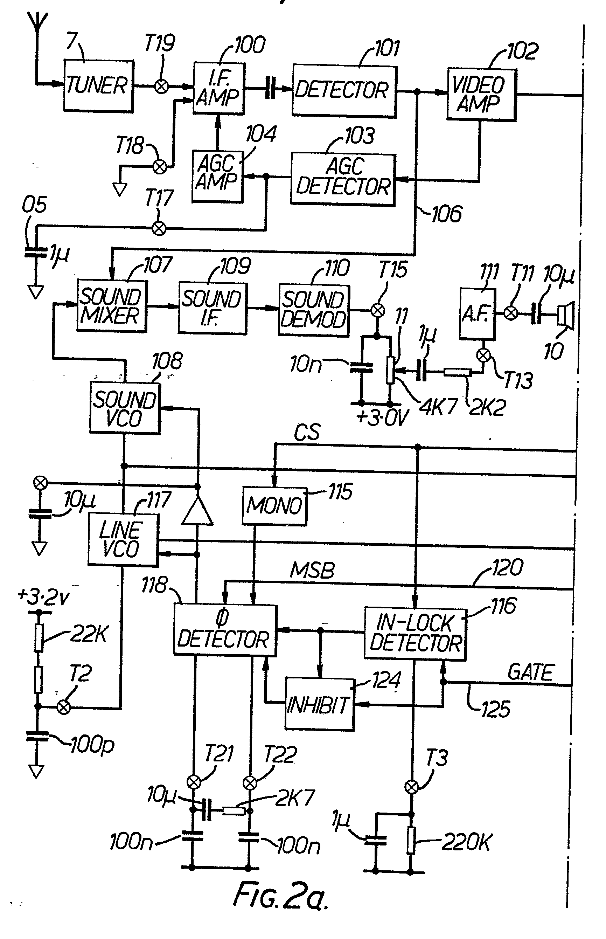

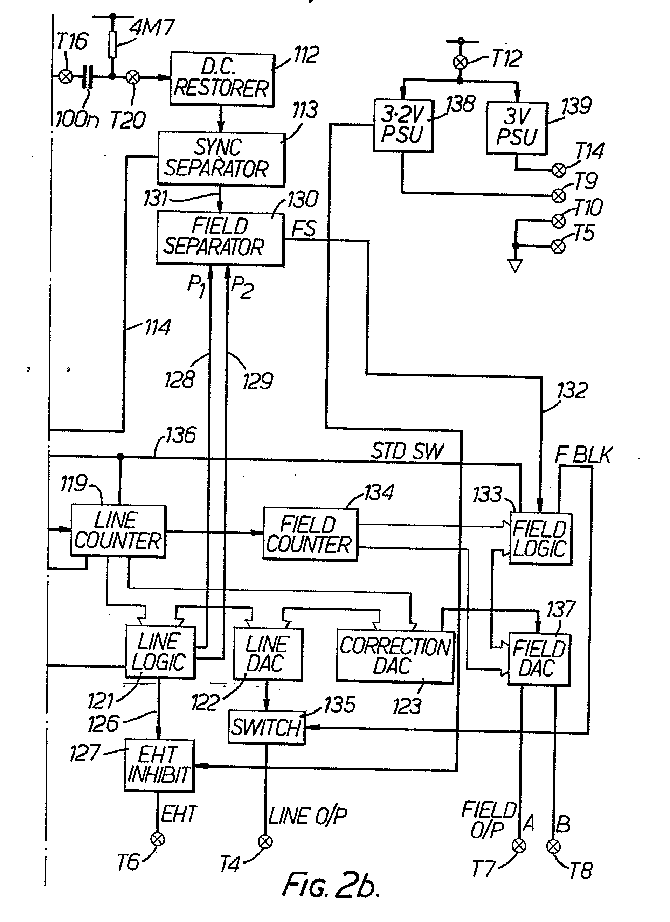

Figure 1 shows the circuit diagram of one example of a television receiver using the invention. The receiver has a flat electrostatically focussed and deflected cathode ray display tube 1 of the type described in British Patent Specification No. 1 592 571. The receiver is powered by a battery 2 providing 6 volts. The battery 2 is connected between an earthed conductor 3 and a supply conductor 4 to which it is connected by an on/off switch 5. The television signals are picked up by an aerial 6 which is connected to a tuner unit 7 which may be of conventional construction. The tuning of the unit 7 is effected by means of one or more varactor diodes to which an adjustable DC voltage is applied from a tuning potentiometer 8. The intermediate frequency output signal from the tuner unit 7 is applied to an integrated circuit 9, the details of which are shown in block diagrammatic form in Figure 2 and which contains the video and sound intermediate frequency, signal separation and processing circuits, detector and amplifier stages together with the sync signal separator and the line and field scanning oscillators. The sound output signal is reproduced by a loudspeaker 10, the volume of which is controlled by a potentiometer 11. The video output signal from the integrated circuit 9 is conveyed by a conductor 12 to a further video amplifier 13 consisting of two transistor stages, the output of which is connected to the grid of the cathode ray tube 1. The line scan signals are applied via a conductor 14 to the line scanning circuit 15 and also to a transistor 16 which operates as a switch to interrupt the DC supply to the primary of a transformer 17 which feeds pulses to produce a 15 volt supply for the video circuits on the line 12. The secondary winding of the transformer 17 supplies the energisation for the heater of the cathode ray tube 1 and this is connected to the collector of the transistor 16 so that the positive-going pulses serve to blank the spot during line flyback. From the collector of the transistor 16 a supply voltage is derived which is established on a conductor 19 and is used to provide the tuning voltage of the tuner 7 via the potentiometer 8. A supply of 3 volts is set up on a supply conductor 20 by a part of the integrated circuit 9 to power the tuner unit 7. The field scan signal for the cathode ray tube 1 is supplied by the integrated circuit 9 via conductors 21 which are connected through a field scan amplifier 22 to the field scan electrodes of the cathode ray tube 1.

The line scanning circuit 15 receives the line drive signal supplied via the conductor 14 at the base of a transistor 23 which switches current through an autotransformer 24. Two outputs from the autotransformer 24 on conductors 25 and 26 supply similar pulses of opposite polarities to switched integrators 27 and 28 respectively which generate saw-tooth waveforms with flybacks caused by the pulses on the conductors 25 and 26, the saw-tooth waveforms being conveyed via conductors 29 to the line signal deflection electrodes of the cathode ray tube 1. The autotransformer 24 also supplies high voltage pulses along a conductor 30 to supply the field amplifier 22 and further high voltage pulses on a conductor 31 for driving a diode - capacitor stack 32 which generates the various EHT voltages for the cathode ray tube 1. A further output from the integrated circuit 9 is fed along a conductor 33 to control the conductivity of a transistor 34 which determines the slopes of the flanks of the saw-teeth by regulating the current fed to the integrators. This control is required because the cathode ray tube 1 is a flat tube with the screen end on to the electron gun.

Figure 2 shows a block diagram of the circuits contained in the integrated circuit 9 of Figure 1, and in Figure 2 the numbered terminals of the integrated circuit package are preceded by the letter T so that the first terminal is T1 and the last is T22. The output of the tuner 7 (Figure 1) is connected via terminal T19 to an intermediate frequency amplifier 100. The amplified output from the IF amplifier 100 is applied to a detector 101 and from that through a video amplifier 102 to the terminal T16. An AGC signal for the amplifier 100 is derived from the amplifier 102 by an AGC detector 103 from which the AGC signal amplified by amplifier 104 is applied to control the gain of the amplifier 100. A capacitor 105 external to the integrated circuit is connected via terminal T17 to the output of the detector 103 to smooth the gain control voltage. The inter-carrier sound is picked off from the output of the video detector 101 and applied via a conductor 106 to a sound channel mixer 107. The oscillation from a local oscillator 108 is mixed with the sound signal from the output of the detector 101 to produce the required intermediate frequency signal which is amplified by IF amplifier 109, the amplified output of which is applied to a demodulator circuit 101 connected to apply the sound output signal to terminal T15. The potentiometer 11 serves as a volume control and regulates the amplitude of the audio signal reapplied to the integrated circuit at terminal T13 for amplification in the AF amplifier 111. The output audio signal is fed via the terminal T11 and a capacitor to the loudspeaker 10.

The video output signal from the amplifier 102 which appears at the terminal T16 is applied as described above with reference to Figure 1 to the grid of the cathode ray display tube 1. It is also reapplied to the integrated circuit via terminal T20 from which it is applied via a DC restoration circuit 112 to a sync separator circuit 113. Pulses at line frequency are conveyed by a conductor 114 to a monostable multivibrator 115 and an IN LOCK detector 116. A picture element frequency oscillator 117 which has its frequency controlled by the output of a phase detector 118 applied pulses to a counter 119 of which the most significant bit output is fed via a conductor 120 to an input of the phase detector 118 which compares the time of arrival of the most significant bit with the output of the monostable 115. The output of the phase detector 118 also controls the frequency of the local oscillator 108. When operating correctly the frequency of occurrence of the most significant bit signals on the conductor 120 will be at line frequency. The digital output of the counter 119 is applied to a line logic circuit 121, a line digital to analogue converter 122 and a correction digital to analogue converter 123. The line logic circuit 121 produces a gate signal which is applied to the phase detector 118 through an INHIBIT circuit 124 for limiting the time period over which the phase detector 118 is effective near each most significant bit output from the counter 119. The IN LOCK detector circuit 116 compares the timing of the line frequency pulses on the conductor 114 with the gate signals from the line logic circuit 121 on conductor 125 and is connected to the INHIBIT circuit 124 to prevent the gate signals from being applied to the phase detector 118 unless the output of the line counter 119 is substantially synchronised with the signals from the monostable 115. The line logic circuit 121 output on the conductor 125 is also applied to the INHIBIT circuit 124. The line logic circuit 121 produces another output on the conductor 126 which is applied to an EHT INHIBIT circuit 127 connected to terminal T6 of the integrated circuit. This part of the circuit functions to inhibit the generation of pulses at line frequency at the terminal T6 when the voltage of the battery 2 falls below 4.3 volts to prevent the display of a distorted picture. The digital to analogue converter 122 produces line deflection rate controlling waveforms for controlling the integrators 27 and 28 (Figure 1) which generate the line scan waveforms and needed because of the geometry of the cathode ray tube 1. The purpose and operation of the digital to analogue converter 123 will be described later. The line logic circuit 121 also produces signals P1 and P2 identifying the odd and even fields on conductors 128 and 129 which are applied to a field separator circuit 130 which receives the field frequency pulses from the sync separator 113 via a conductor 131. The field sync pulses from the separator 130 are applied via a conductor 132 to a field logic

- 14 -

circuit 133 which receives the digital output from a field counter 134 driven by pulses from the counter 119. Blanking signals from the field logic circuit 133 are fed to a switch 135 to ground the terminal T4 and thereby hold the cathode ray tube spot at the left-hand side of the frame during field flyback. The field logic circuit 133 also produces line number standard switch output which is conveyed via a conductor 136 to the oscillators 108 and 117 and to the line counter 119 to enable the receiver to handle different television standards. The digital outputs from the field counter 134 are also applied to a field digital to analogue converter 137 which produces field scan drive signals on terminals T7 and T8. The output of the correction digital to analogue converter 123 is applied as the reference voltage for the converter 137. This correction is needed because the cathode ray tube 1 is a flat tube in which the screen lies end on to the electron gun. It will be appreciated that with a tube of this type if the field deflection voltage is kept constant whilst the line deflection voltage is varied to generate a line, the resulting picture would be trapezoidal in shape. In order to produce a rectangular picture, it is necessary to adjust the field deflection voltage as a line is described by the spot and the purpose of the converter 123 is to cause the field deflection voltage output of the field digital to analogue converter 137 to be adjusted according to the position of the spot along the line so as to produce a rectangular picture. The integrated circuit 9 also includes a 3.2 volt power supply 138 and a 3 volt power supply 139 energised from the main battery supply line 4 via terminal T12. The 3.2 volt supply is connected internally to the EHT INHIBIT circuit 127 and to the terminal T9. The 3 volt supply is connected just to the terminal T14. Earth connections are provided at terminals T5 and T10 and terminals T1, T3, T21 and T22 are provided for the connection of relatively large capacitances to the circuit.

It is not proposed to enter into a detailed description of the generation of the scanning signals and the operation of the circuits directly associated with this because these form the subject of other copending patent applications. The operation of the parts of the integrated circuit is otherwise fairly conventional for a television receiver, but where the circuit departs from the usual it will either be described later on in the present patent application or in another co-pending patent application.

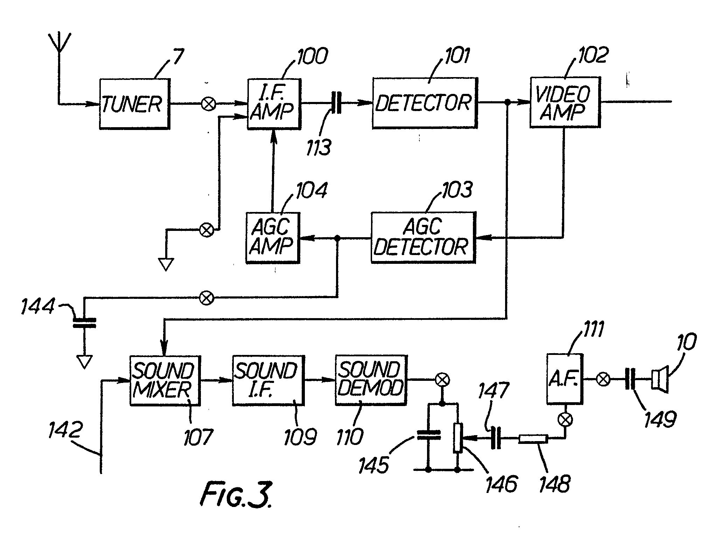

Referring to Fig. 3, the signal-input circuit blocks of a television receiver system, which incorporates the present invention, includes the tuner 7, the I.F. amplifier 100, the detector circuit 101, the video amplifier 102, the automatic gain control (AGC) detector 103, the AGC amplifier 104, the sound mixer 107 the sound I.F. amplifier 109, the sound demodulator 110, and the sound output amplifier 111.

As is usual for the operation of this part of a television receiver system, a signal from a television transmitter is received by an aerial to which the tuner 7 is connected, and the tuner 7 frequency shifts the received signal to the I.F. and passes the I.F. signal to the I.F. amplifier 100 providing gain and bandshaping and then passing the I.F. signal to the detector 101 by way of a coupling capacitor 113. The detector 101 recovers the information signal, which is the television video signal, and supplies the video signal to a display device (usually a cathode ray tube). The video signal is also processed by the AGC detector 103 which provides a d.c. level corresponding to the video signal amplitude. The d.c. level output of the AGC detector 103 is smoothed by a capacitor 114, amplified by the AGC amplifier 104 and is applied to the intermediate frequency amplifier 100 in such a sense as to stabilise the amplitude of the intermediate frequency amplifier output signal.

The detector signal passes also to the sound mixer stage 197 which is provided with a reference frequency signal on an input port 142 and which uses the reference frequency to shift the input signal in frequency to a sound intermediate frequency. The sound intermediate frequency signal is then amplified by the sound intermediate frequency amplifier 109, the audio frequency signal is recovered by the sound demodulator 110, and the audio frequency signal is amplified by the audio frequency amplifier 141 which drives a speaker 10 to which it is coupled through a capacitor 149. Tone and volume controlling components 145, 146, 147, and 148 are included at the audio frequency amplifier 141.

The tuner 7 is relatively conventional but departs from established tuner practice in that

- 18 -

it has an intermediate frequency of 230 MHz.

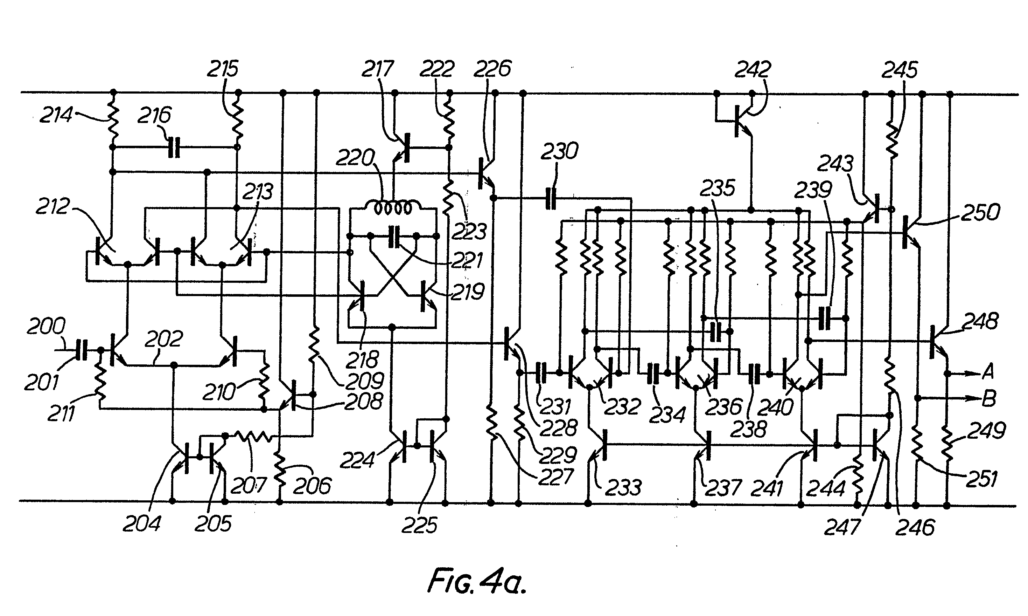

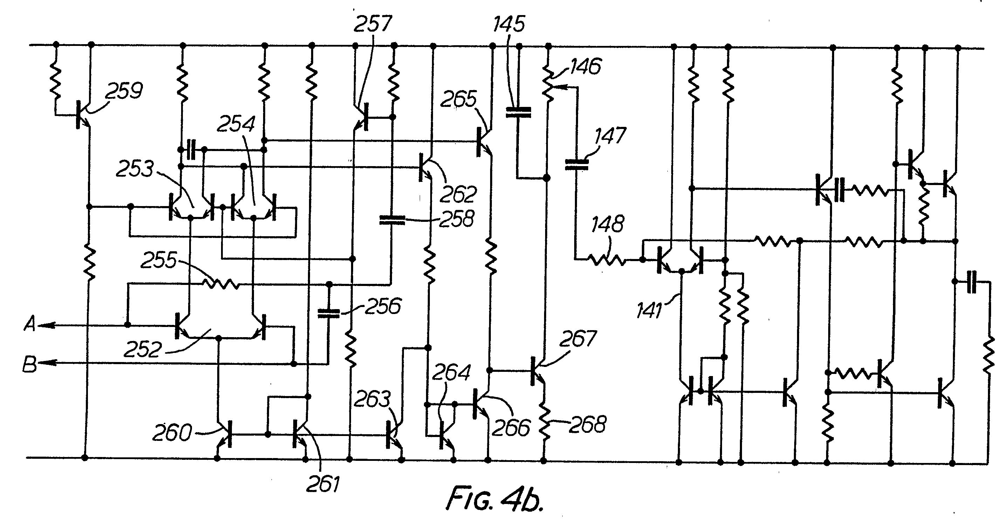

Referring to Fig. 4, a sound mixer includes an input port 200 connected to a base electrode of an input differential transistor pair 202 by way of an input coupling capacitor 201, and current and voltage bias supply sources for the input differential transistor pair 202. The bias supply sources include transistors 204, 205, and 208 and resistors 206, 207, 209, 210, and 211. The collector circuit of each of the transistors forming the differential transistor pair 202 is connected to the common emitter electrodes of respective further differential transistor pairs 212 and 213. The left hand transistors of the further differential transistor pairs 212 and 213 have a common collector load resistor 214 and the right-hand transistors similarly share a collector load resistor 215. The base electrodes of the differential transistor pairs 212 and 213 are driven by a fixed frequency signal from an oscillator consisting of the circuit elements 217 to 225. The base electrode of the left-hand transistor of the differential pair 212 is connected to the base electrode of the right-hand transistor of the differential pair 213 and the two base electrodes are connected to one side of the output port of the oscillator. The base electrode of the right-hand transistor of the differential pair 212 is connected to the base electrode of the left-hand transistor of the differential pair 213 and the two base electrodes are connected to the other side of the output port of the oscillator. The arrangement of connections to the differential pairs 212 and 213 provide antiphase output signals at the respective collector load resistors 214 and 215. A bandwidth-limiting capacitor 216 is connected between the collector load resistors 214 and 215.

The collector load resistors 214 and 215 of the sound mixer are connected to respective buffer amplifier transistors 226 and 228, the transistor 226 having an emitter load resistor 227 and the transistor 228 having an emitter load resistor 229.

The buffer amplifier transistors 226 and 228 drive a limiting amplifier by way of respective capacitors 230 and 231. The limiting amplifier includes a first stage consisting of a differential transistor pair 232 with a common emitter current-source transistor 233 and base bias and collector load resistors. The first stage is connected by way of capacitors 234 and 235 to a second stage identical to the first stage and the second stage is connected by way of capacitors 238 and 239 to a third stage identical to the preceding stages. The second stage includes a transistor pair 236 and an emitter current source transistor 237 and the corresponding components in the third stage are 240 and 241, respectively. The collector currents for all the stages is drawn from a power supply line by way of a diode-connected transistor 242 and base and emitter bias for all the stages is supplied by the components 243 to 247.

The collector loads of the third stage of the limiting amplifier are d.c. coupled to respective buffer amplifiers 248 and 250 which have respective emitter resistors 249 and 251.

The buffer amplifier transistors 248 and 250 are d.c. coupled to the respective base electrodes of a differential transistor pair 252 which forms part of an audio signal detector. The left-hand transistor of the differential pair 252 has a differential transistor pair 253 as its collector load and the right-hand transistor of the differential pair 252 has a differential transistor pair 254 as its collector load. The collectors of the left-hand transistors of the differential pairs 253 and 254 are connected to a common load resistor and the right-hand transistors of the pairs are connected to another common load resistor. The common emitters of the differential transistor pair 252 are connected to a current source provided by a transistor 260, a diode-connected transistor 261, and an associated resistor. A resistor 255 and a capacitor 256, in series, are connected from base electrode to base electrode of the transistors of the differential pair 252 and the junction of the resistor 255 and the capacitor 256 is a.c. coupled by a capacitor 258 to the base electrode of a transistor 257 which is provided with a base bias resistor and an emitter load resistor. The emitter of the transistor 257 is d.c. coupled to the base electrode of the right-hand transistor of the differential pair 253 and to the base electrode of the left-hand transistor of the differential pair 254. The base electrodes of the other transistors of the differential pairs 253 and 254 are connected together and to a biassing circuit including a transistor 259 with base and emitter resistors. The differential pairs 253 and 254 also include a bandwidth-limiting capacitor connected between the collector load resistors.

The collector load resistors of the differential pairs 253 and 254 are connected to respective buffer amplifier transistors 262 and 265 which are biassed by means of transistors 263 and 264, and emitter resistors.  A transistor 266 connected between the transistor  buffer amplifiers 262 and 266 converts the double-ended source to a single-ended output and the collector electrode of the transistor 266 is d.c. coupled to a further buffer amplifier transistor 267 which has an emitter load resistor 268 and which has, as its collector load, the capacitor 115 and volume control potentiometer 116 shown in Fig. 3.  The audio output signal is a.c. coupled to the audio output amplifier 111, shown in Fig. 3, by way of a capacitor 117 and a series resistor 118, also shown in Fig. 3.

In the operation of the arrangement represented by Fig. 4, an input audio intermediate frequency signal applied at the input port 200 of the mixer stage (201 to 228) is mixed with the fixed frequency oscillator signal which has a frequency of 5.75 MHz. In practice, the audio intermediate frequency signal may have an intermediate carrier frequency of either 6.0 MHz or 5.5 MHz, and, after mixing, either intermediate, carrier frequency will give rise to a lower intermediate frequency signal with a carrier at .25 MHz or 250 KHz. The signal is, of course, a frequency-modulated signal, and the limiting amplifier (131 to 148) is required to remove all amplitude variation prior to detection of the audio signal in the detector stage (259 to 265).

The detector stage (259 to 265) obtains a signal shifted by $90^{\circ}$ for the mixing operation by means of the resistor 255 and the capacitor 256, the series combination of which is arranged to receive input signals with an $180^{\circ}$ phase difference. The junction of the resistor 255 and the capacitor 256 provides a signal shifted $90^{\circ}$ from either input signal to the detector input stage 252 and the phase shifted signal is amplified by the transistor 257 and applied to the differential pairs 253 and 254 as required to obtain the audio signal.

The mixer stage (201 to 228) in Fig. 4 includes a bandwidth-limiting capacitor 216 connected between the collector load resistors 214 and 215 of the differential pairs 212 and 213, respectively. There are, of course, alternative positions for bandwidth-limiting components. For example, the capacitor 216 need not be present, and, instead, bandwidth-limiting may be achieved by introducing base resistors for the transistors 226 and 228 and connecting capacitors from the bases of the transistors 226 and 228 to the voltage supply line, and also connecting capacitors from the resistors 214 and 215 to the emitters of the transistors 226 and 228.

The oscillator (217 to 225) shown in Fig. 4 may be an astable multivibrator or any form of oscillator suitable for integration, such as a ring of logic gates.

The arrangement represented by Fig. 4 is capable of handling the sound signals belonging to two different television transmission standards, namely the 625 line system with a sound and vision carrier separation of 6 MHz and the 625 line system with a sound and vision carrier separation of 5.5 MHz.

0147010

- 25 -

Claims:

1. A television receiver, capable of receiving two different standard transmissions which have similar video components but different vision and sound carrier frequency separations, having internal signal processing capable of extracting the sound signal from a transmission on either standard.

2. A television receiver sub-system, for a television receiver capable of receiving two different standard transmissions which have similar video components but different vision and sound carrier frequency separations, capable of processing signals having respective first and second sub-carrier frequencies and including:-

(i) signal mixing means arranged to produce sum and difference frequencies of signals applied to respective first and second input ports and arranged to receive, on the first input port, a signal to be processed.

(ii) an oscillator having an operating frequency that is the mean of the said first and second sub-carrier frequencies, connected to the second input port of the signal mixing means, and,

(iii) a detector arranged to operate at a frequency which is the difference between either sub-carrier frequency and the oscillator frequency and arranged to receive the signals produced by the signal mixing means.

3. A television receiver sub-system, as claimed in claim 2, for a television receiver capable of multi-standard reception where two standard transmissions give rise to two different intercarrier frequencies, including:-

(i) signal mixing means arranged to receive an intercarrier sound signal on one input port and an oscillator signal on another input port,

(ii) an oscillator connected to the signal mixing means and arranged to operate at a frequency which is the mean of the two different intercarrier frequencies, and,

(iii) a product detector arranged to operate at a frequency which is the difference between either inter-carrier frequency and the oscillator frequency.

4. A television receiver as claimed in claim 1, capable of multi-standard reception, arranged, where two different standards employ the same number of lines but with different vision and sound carrier frequency separations, to provide internal signal processing capable of

0147010

- 27 -

extracting the sound signal of a transmission on either of the said two standards.

5. A television receiver capable of multi-standard reception, including a sub-system as claimed in claim 2 or claim 3.

6. A television receiver sub-system, as claimed in claim 2 or claim 3, for a television receiver capable of multi-standard reception, wherein the detector includes a differential input mixing stage, a capacitor-resistor network connected across the differential input providing, from within the capacitor-resistor network, a $90^{\circ}$ phase shift relative to either input, and means arranged to apply a signal present at the $90^{\circ}$ phase shift position in the network to the input mixing stage to effect product detection of a signal applied to the detector.

7. A television receiver sub-system as claimed in claim 6, for a television receiver capable of multi-standard reception, wherein the capacitor-resistor network consists of a series circuit of a capacitor and a resistor suitable for incorporation in an integrated circuit product detector.

8. A product detector, suitable for use in a television receiver capable of multi-standard reception, including a differential input mixing stage, a capacitor-resistor network connected across the differential input providing, from within the capacitor resistor network, a $90^{\circ}$ phase shift relative to either input, and means arranged to apply a signal present at the $90^{\circ}$ phase shift position in the network to the input mixing stage to effect product detection of a signal.

9. A product detector as claimed in claim 8, suitable for use in a television receiver capable of multi-standard reception wherein the capacitor-resistor network consists of a series circuit of a capacitor and a resistor suitable for icnorporation in an integrated circuit.

10. A method of detecting the sound signals of two television standard transmissions which give rise to two different intercarrier, frequencies includes the steps of mixing either intercarrier sound signal with an oscillator signal which is the mean value of the two intercarrier frequencies and applying the mixed signal to a detector arranged to operate at a frequency which is the difference between either intercarrier frequency and the oscillator frequency.

11. A method of detecting a signal including the steps of generating in-phase and anti-phase signals from the said signal, obtaining a further signal shifted by $90^\circ$ in phase from the in-phase and anti-phase signals from within a network energised by the in-phase and anti-phase signals, and applying the $90^\circ$ phase shifted signal to either the in-phase or anti-phase signals, or to both the in-phase and anti-phase mixed signals, in a product detector.

12. A method of detecting a signal as claimed in claim 11, including the steps of generating a sound signal on a sub-carrier from a television intercarrier sound signal, generating in-phase and anti-phase signals from the said sub-carrier signal, obtaining a further signal shifted by $90^\circ$ in phase from the in-phase and anti-phase signals from within a network energised by the in-phase and anti-phase signals, and applying the $90^\circ$ phase shifted signal to both the in-phase and anti-phase signals in a product detector.

FIG. 1a.

FIG.1b.

0147010

**FIG.Ic.**

0147010

Fig.2a.

*Fig. 2b.*

FIG.3.

FIG. 4a.

0147010

Fig. 4b.

European Patent
Office

**EUROPEAN SEARCH REPORT**

Application number

| | DOCUMENTS CONSIDERED TO BE RELEVANT | | | EP 84306296.9 |
|---|---|---|---|---|
| **Category** | Citation of document with indication, where appropriate, of relevant passages | | Relevant to claim | CLASSIFICATION OF THE APPLICATION (Int. Cl.4) |
| X | DE - A - 1 908 044 (BLAUPUNKT)<br>* Page 3, lines 9-28 *<br>-- | | 1,4 | H 04 N 5/46 |
| A | DE - C - 977 272 (LOEWE OPTA)<br>* Page 1, lines 1-19; page 2, lines 32-51 *<br>-- | | 2,3,5,<br>10 | |
| A | US - A - 2 750 441 (SCHLESINGER)<br>* Fig. 1 *<br>-- | | 2,3,5,<br>10 | |
| A | DE - B2 - 2 812 895 (SANYO ELEC-<br>TRIC)<br>* Fig. 7; column 8, lines 41-49 *<br>-- | | 6,8,11,<br>12 | |
| A | TELEFUNKEN LABORBUCH, vol. VI,<br>1980<br>AEG-TELEFUNKEN, Ulm<br>pages 109, 110<br>* Page 109, fig. 1 *<br>---- | | 7,9 | **TECHNICAL FIELDS SEARCHED (Int. Cl.4)**<br><br>H 04 N 5/00 |

The present search report has been drawn up for all claims

| Place of search | Date of completion of the search | Examiner |
|---|---|---|
| VIENNA | 06-12-1984 | BENISCHKA |

EPO Form 1503 03 82